# EUROPEAN PATENT SPECIFICATION

(11) **EP 4 262 246 B1**
(45) Date of publication and mention of the grant of the patent: **25.12.2024**
(21) Application number: 21934040.3
(22) Date of filing: 01.04.2021
(51) Int. Cl.: H04W 4/06, H04W 40/12, H04W 40/22, H04W 88/04

(54) **REPEATER MODE DETERMINING METHOD, ELECTRONIC DEVICE, AND STORAGE MEDIUM**
VERFAHREN ZUR BESTIMMUNG EINES REPEATERMODUS, ELEKTRONISCHE VORRICHTUNG UND SPEICHERMEDIUM
PROCÉDÉ DE DÉTERMINATION DE MODE DE RÉPÉTEUR, DISPOSITIF ÉLECTRONIQUE ET SUPPORT DE STOCKAGE

(43) Date of publication of application: 18.10.2023
(73) Proprietor: GUANGDONG OPPO MOBILE TELECOMMUNICATIONS CORP., LTD., Dongguan, Guangdong 523860 (CN)
(72) Inventor: ZHANG, Boyuan, Dongguan, Guangdong 523860 (CN)
(74) Representative: Ipside
(86) International application number: PCT/CN2021/085126
(87) International publication number: WO 2022/205383

(56) References cited:
- EP-A1- 3 618 391
- CN-A- 101 841 861
- CN-A- 108 809 897
- CN-A- 110 098 858
- CN-A- 110 099 423
- US-A1- 2019 350 047
- US-A1- 2019 357 284
- "3rd Generation Partnership Project; Technical Specification Group Services and System Aspects; Study on system enhancement for Proximity based Services (ProSe) in the 5G System (5GS) (Release 17)", vol. SA WG2, no. V1.1.0, 15 March 2021 (2021-03-15), pages 1 - 183, XP052000008, Retrieved from the Internet <URL:https://ftp.3gpp.org/Specs/archive/23_series/23.752/23752-110.zip 23752-110_rm.docx> [retrieved on 20210315]

## Description

### TECHNICAL FIELD

The disclosure relates to the technical field of wireless communications, in particular to a method for determining a relay mode, a relay terminal and a network device.

### BACKGROUND

A new radio (NR) system may support two relay modes simultaneously. For example, a NR system supports a layer 2-based network relay and a layer 3-based network relay simultaneously. In the case where the NR system supports two relay modes simultaneously, it is not clear how to determine a relay mode adopted in actual transmission.

CN110099423A discloses a relay working mode selection method, which includes: sending terminal capability indication information to network side equipment; receiving relay working mode indication information sent by the network side equipment according to the terminal capability indication information; and selecting a relay working mode according to the relay working mode indication information. EP3618391A1 relates to a relay discovery and relay forwarding method, including: performing a relay discovery operation; discovering a relay device that carries out relay and forwarding for a source device; sending a data packet to the relay device; and forwarding the data packet to a target device by means of the relay device.

### SUMMARY

The invention is set out in the appended set of claims. Embodiments of the disclosure provide a method for determining a relay mode, a relay terminal and a network device, which can determine the relay mode adopted in actual transmission.

### BRIEF DESCRIPTION OF THE DRAWINGS

FIG. 1 is a schematic diagram of a sidelink discovery according to an embodiment of the present disclosure.
FIG. 2 is a schematic diagram of a communication system according to an embodiment of the present disclosure.
FIG. 3 is a schematic diagram of an optional processing flow of a method for determining a relay mode according to an embodiment of the present disclosure.
FIG. 4 is a schematic diagram of another optional processing flow of a method for determining a relay mode according to an embodiment of the present disclosure.
FIG. 5 is a schematic diagram of yet another optional processing flow of a method for determining a relay mode not being part of the invention.
FIG. 6 is a schematic diagram of still another optional processing flow of a method for determining the relay mode not being part of the invention.
FIG. 7 is a schematic diagram of an optional composition structure of a relay terminal according to an embodiment of the present disclosure.
FIG. 8 is a schematic diagram of an optional composition structure of a network device according to an embodiment of the present disclosure.
FIG. 9 is a schematic diagram of an optional composition structure of a first terminal device not being part of the invention.
FIG. 10 is a schematic diagram of an optional composition structure of a second terminal device not being part of the invention.
FIG. 11 is a schematic diagram of a hardware composition structure of an electronic device not being part of the invention.

### DETAILED DESCRIPTION

In order to enable a more detailed understanding of the features and technical contents of the embodiments of the present disclosure, implementations of the embodiments of the present disclosure will be described in detail below in conjunction with the accompanying drawings, which are provided for illustration only and are not intended to limit the embodiments of the present disclosure.

Before describing the embodiments of the present disclosure, related contents will be briefly explained.

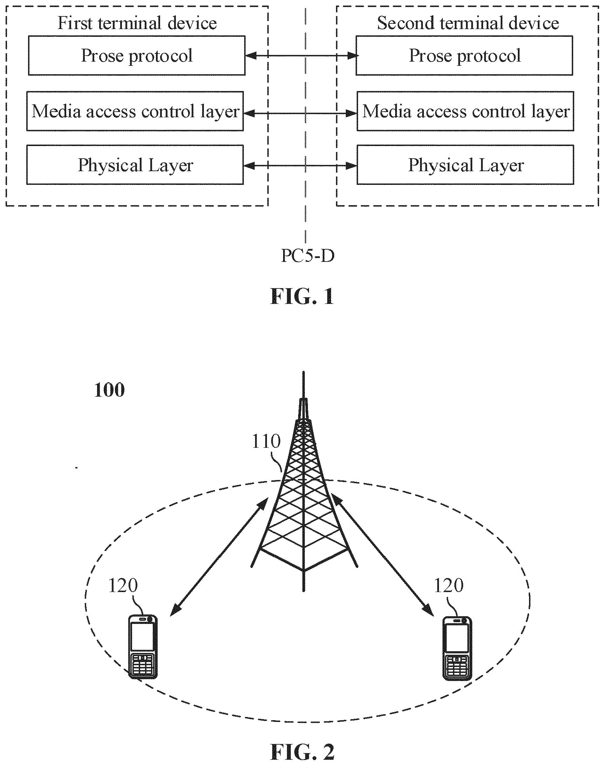

FIG. 1 illustrates a schematic diagram of a sidelink discovery in release 13 (Rel-13). The sidelink discovery is defined as a process that a terminal device supporting sidelink discovery communicates directly using an evolved universal mobile telecommunications system (Evolved-UMTS) terrestrial radio access (E-UTRA) and discovers other terminal devices in its vicinity via PC5. The sidelink discovery is supported when the terminal device is served by E-UTRA network (EUTRAN) or when the terminal device is located in the coverage of the E-UTRA. The sidelink discovery is performed only when a terminal device supporting prose public safety is out of the coverage of the E-UTRA. For a public safety sidelink discovery, an allowed frequency is pre-configured in the terminal device and the allowed frequency is used even if the terminal device is out of the coverage of the E-UTRA in the frequency. The pre-configured frequency is the same as the frequency of a carrier for the public safety.

In the sidelink discovery, the high layer processes notifications and monitors grant for discovery messages. The content of the discovery messages is transparent to the access stratum (AS), and there is no distinction between the sidelink discovery model and the sidelink discovery type in the AS. However, the high layer will notify whether the sidelink discovery broadcast involves public safety discovery or non-public safety discovery. A higher layer also notifies whether the discovery announcement or monitoring is related to network relay discovery or other public safety discoveries.

The terminal device can participate in, according to configurations from a network device, broadcasting and monitoring of discovery messages in the Uu idle state and the radio resource control (RRC) connected state. The terminal device broadcasts and monitors its discovery messages under the half-duplex constraint.

The terminal device participating in broadcasting and monitoring of a discovery message maintains the current universal time coordinated (UTC) time. The terminal device participating in the broadcasting transmits a discovery message generated by a prose protocol, and takes into account the UTC when the discovery message is transmitted. In the terminal device for monitoring, the prose protocol provides a message, and the message is verified together with UTC provided by the prose function received.

To perform synchronization, a terminal device participating in broadcasting of the discovery message may act as a synchronization source by sending send a sidelink broadcast control channel (SBCCH) based on resource information of synchronization signal provided in a system information block (SIB) type 19.

The applicable range level for a terminal device provided by upper grant includes three ranges. A maximum transmission power allowed for each range level is given in SIB 19. The terminal device uses an applicable allowed maximum transmission power corresponding to a granted range level thereof, which sets an upper threshold for a transmit power determined based on the open-loop power control parameters.

In release 17 (Rel-17), it has been discussed that a layer 2-based network relay and a layer 3-based network relay can coexist, i.e., the NR system can support both the layer 2-based network relay and the layer 3-based network relay simultaneously. Therefore, when an intermediate service is configured, a network device needs to explicitly indicate configurations respectively corresponding to different relay modes. When a terminal device sends a relay message, the terminal device is also required to explicitly indicate a relay mode corresponding to the discovery message.

In view of above, embodiments of the disclosure provide a method for determining a relay mode. The technical proposal provided by the embodiments of the disclosure can be applied to various communication systems, such as, a global system of mobile communication (GSM) system, a code division multiple access (CDMA) system, a wideband code division multiple access (WCDMA) system, a general packet radio service (GPRS), a LTE system, a LTE frequency division duplex (FDD) system, a LTE time division duplex (TDD) system, an advanced long term evolution (LTE-A) system, a NR system, an evolution system of NR system, a LTE-based access to unlicensed spectrum, LTE-U) system, a NR-based access to unlicensed spectrum (NR-U) system, an universal mobile telecommunications system (UMTS), a world interoperability for microwave access (WiMAX) communication system, a wireless local area network (WLAN), a wireless fidelity (WiFi), a next generation communication system or other communication systems.

System architectures and service scenarios described in the embodiments of the disclosure are intended to more clearly explain the technical proposal provided by the embodiments of the disclosure, and do not constitute a limitation to the technical proposal provided by the embodiments of the disclosure. Those skilled in the art can appreciated that the technical proposal provided by the embodiments of the disclosure is equally applicable to similar technical problems with the evolution of the network architecture and the emergence of new service scenarios.

The network device in the embodiments of the present disclosure may be a common base station (such as, a NodeB, eNB or gNB), a new radio controller (NR controller), a centralized unit, a new radio base station, a radio remote module, a micro base station, a relay, a distributed unit, a transmission reception point (TRP), a transmission point (TP) or any other devices. A specific technology adopted by the network device and a specific device form are not limited in the embodiments of the present disclosure. For convenience of description, in all embodiments of the present disclosure, the above-mentioned apparatus configured to provide a wireless communication function for a terminal device is collectively called as a network device.

In the embodiments of the present disclosure, the terminal device may be any terminal. For example, the terminal device may be user equipment for machine type communication. That is to say, the terminal device may also be called as UE, a mobile station (MS), a mobile terminal (MS), a terminal, etc. The terminal device may communicate with one or more core networks via a radio access network (RAN). For example, the terminal device may be a mobile telephone (or "cellular" telephone), a computer with a mobile terminal, etc. For example, the terminal device may also be a portable mobile device, a pocket-sized mobile device, a hand-held mobile device, a computer-built mobile device or a vehicle-mounted mobile device that can exchange language and/or data with the radio access network, which is not specifically limited in the embodiments of the present disclosure.

Optionally, the network device and the terminal device can be deployed on land including indoor or outdoor environments, hand-held or vehicle-mounted configurations; deployed on the water surface; or deployed on airplanes, balloons and artificial satellites in the air. Embodiments of the present disclosure do not limit application scenarios of the network device and the terminal device.

Optionally, communications between a network device and a terminal device and between terminal devices may be performed through the licensed spectrum, the unlicensed spectrum, or both the licensed spectrum and the unlicensed spectrum. Communications between a network device and a terminal device and between terminal devices can be performed over frequency spectra below 7 gigahertz (GHz) or above 7GHz, and can also be performed over both frequency spectra below 7GHz and frequency spectra above 7GHz. The frequency spectrum resources used between the network device and the terminal device are not limited in the embodiments of the present disclosure.

In general, the number of connections supported by traditional communication systems is limited and easy to implement. However, with the development of communication technology, mobile communication systems will not only support traditional communication, but also support, for example, device to device (D2D) communication, machine to machine (M2M) communication, machine-type communication (MTC), vehicle to vehicle (V2V) communication, or vehicle to everything (V2X) communication, etc. Embodiments of the present disclosure can also be applied to these communication systems.

Exemplarily, a communication system 100 applied in embodiments of the present disclosure is shown in FIG. 2. The communication system 100 may include a network device 110. The network device 110 may be a device that communicates with a terminal device 120 (which is also called as a communication terminal or a terminal). The network device 110 may provide communication coverage for a particular geographic area and may communicate with terminal devices located within the coverage. Optionally, the network device 110 may be a base transceiver station (BTS) in a GSM system or a CDMA system, a base station (NodeB, or NB) in a WCDMA system, an evolved base station (Node B, eNB or eNodeB) in an LTE system, or a wireless controller in a cloud radio access network (CRAN). Optionally, the network device may be a mobile switching center, a relay station, a access point, a vehicle-mounted device, a wearable device, a hub, a switch, a bridge, a router, a network-side device in a 5G network, or a network device in a future evolved public land mobile network (PLMN).

The communication system 100 also includes at least one terminal device 120 located within the coverage of the network device 110. The "terminal device" used herein includes, but is not limited to, an apparatus which may be connected via wired lines, such as a public switched telephone networks (PSTN) and a digital subscriber lines (DSL), a digital cable, or a direct cable connection; and/or another data connection/network; and/or via a wireless interface, such as a cellular network, a wireless local area network (WLAN), a digital TV network such as a DVB-H Digital television network, a satellite network, or an AM-FM broadcast transmitter; and/or a device of another terminal device configured to receive/send communication signals; and/or Internet of things (IoT) device. A terminal device configured to communicate via a wireless interface may be referred to as a "wireless communication terminal", a "wireless terminal" or a "mobile terminal". Examples of mobile terminals include, but are not limited to, satellites or cellular phones; personal communications system (PCS) terminals that can combine a cellular radiotelephony with data processing, fax, and data communication capabilities; PDAs that may include radiophones, pagers, Internet/intranet access, web browsers, notebooks, calendars, and/or global positioning system (GPS) receivers; and conventional laptop and/or handheld receivers or other electronic devices including radiophone transceivers. The terminal device can refer to a access terminal, user equipment (UE), a user unit, a user station, a mobile station, a mobile site, a remote station, a remote terminal, a mobile device, a user terminal, a terminal, a wireless communication device, a user agent or a user device. The access terminal can be a cellular telephone, a cordless telephone, a session initiation protocol (SIP) telephone, a wireless local loop (WLL) station, a personal digital Assistant (PDA), a handheld device with wireless communication function, a computing device or another processing device connected to a wireless modem, an on-board device, a wearable device, a terminal in 5G network or a terminal device in a future evolved PLMN.

Optionally, Device-to-Device (D2D) communication may be performed between terminal devices 120.

Optionally, a 5G communication system or 5G network may also be referred to as an NR system or NR network.

FIG. 2 exemplarily illustrates one network device and two terminal devices. Optionally, the communication system 100 may include multiple network devices, and other numbers of terminal devices may be included within the coverage of each network device, which is not limited by embodiments of the present disclosure.

Optionally, the communication system 100 may also include other network entity, such as, a network controller, a mobility management entity or the like, which is not limited in the embodiments of the present disclosure.

It should be understood that a device having a communication function in a network or system in the embodiments of the present disclosure may be called as a communication device. Taking the communication system 100 shown in FIG. 2 as an example, the communication device may include a network device 110 and a terminal device 120 that both have the communication function, and the network device 110 and the terminal device 120 may be the specific devices described above, which will not be described herein. The communication device may also include other devices in the communication system 100, such as a network controller, a mobility management entity and other network entities, which are not limited in the embodiments of the present disclosure.

It should be understood that in various embodiments of the present disclosure, the sequence numbers of all implementation processes do not mean an order of implementation, and the implementation order of all processes should be determined by the functions and inherent logics of the processes, and the sequence numbers of all implementation processes should not define, in any way, the implementation processes of the embodiments of the present disclosure.

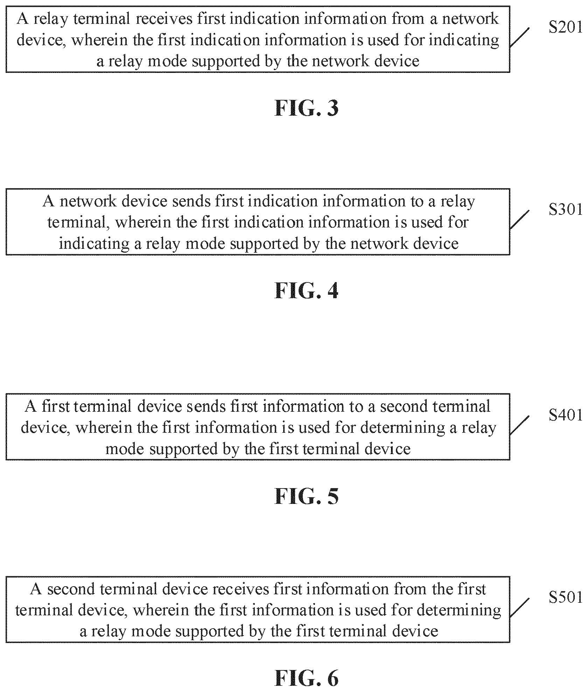

FIG. 3 illustrates an optional processing flow of a method for determining a relay mode provided by an embodiment of the present disclosure. The method may at least include an operation S20.

In operation S201, a relay terminal receives first indication information from a network device, where the first indication information is used for indicating a relay mode supported by the network device.

In some embodiments, during communication between the terminal device and the network device, the coverage of the network device may be increased by means of a relay technology. A device configured to implement the relay technology may be called as a relay terminal.

In some embodiments, the relay mode may include a layer 2-based network relay and a layer 3-based network relay. The relay mode may also include a layer 1-based network relay or other relay modes.

Different ways in which the network device sends the first indication information to the relay terminal are described below.

In the first way, configuration information of the layer 2-based network relay and configuration information of the layer 3-based network relay are contained in different system broadcast messages.

In some embodiments, the first indication information may be included in a first system broadcast message if the relay mode supported by the network device is the layer 2-based network relay. The first indication information may be included in a second system broadcast message if the relay mode supported by the network device is the layer 3-based network relay. If the network device supports the layer 2-based network relay and the layer 3-based network relay simultaneously, it may be considered that the first indication information includes two parts, one part of the first indication information is included in the first system broadcast message and is used for indicating that the network device supports the layer 2-based network relay; and the other part of the first indication information is included in the second system broadcast message and is used for indicating that the network device supports the layer 3-based network relay. Each of the first system broadcast message and the second system broadcast message may be a system broadcast block (SIB).

In some embodiments, the first indication information may include at least one of the configuration information of the layer 2-based network relay or the configuration information of the layer 3-based network relay. After the relay terminal receives the first indication information, the relay terminal determines whether the network device supports the layer 2-based network relay according to whether the first indication information includes the configuration information of the layer 2-based network relay. After the relay terminal receives the first indication information, the relay terminal determines whether the network device supports the layer 3-based network relay according to whether the first indication information includes the configuration information of the layer 3-based network relay.

In the second way, the network device explicitly carries capability indication information of at least one of the layer 2-based network relay or the layer 3-based network relay in a system broadcast message associated with a relay.

In some embodiments, the first indication information includes a first field for indicating that the relay mode supported by the network device is at least one of the layer 2-based network relay or the layer 3-based network relay.

In some embodiments, the first indication information is included in the system broadcast message associated with the relay.

For example, if the relay terminal receives a system broadcast message from the network device within the coverage of the network device, and the system broadcast message carries the first indication information, the content of which is as follows, then the relay terminal may determine, according to the "relayTypeCapability" field, that the network device supports both the layer 2-based network relay and the layer 3-based network relay.

```
   relayTypeCapability CHOICE {
          layer2
          layer3
          both
   }
```

In the third way, the network device carries at least one of the configuration information of the layer 2-based network relay or the layer 3-based network relay respectively in a system broadcast message associated with a relay. It is implicitly indicates whether the network device supports at least one of the layer 2-based network relay or the layer 3-based network relay according to whether the system broadcast message associated with the relay carries at least one of the configuration information of the layer 2-based network relay or the configuration information of the layer 3-based network relay.

In some embodiments, the first indication information is included in the system broadcast message associated with the relay. The relay mode supported by the network device is the layer 2-based network relay if the system broadcast message associated with the relay includes the configuration information of the layer 2-based network relay; and the relay mode supported by the network device is the layer 3-based network relay if the system broadcast message associated with the relay includes the configuration information of the layer 3-based network relay.

In a specific implementation, if the relay terminal receives the system broadcast message from the network device within the coverage of the network device, the relay terminal may determine that the network device supports at least one of layer 2-based network relay or the layer 3-based network relay according to whether the received system broadcast message carries at least one of the configuration information of the layer 2-based network relay or the configuration information of the layer 3-based network relay. If the network device does not indicate the relay mode supported by the network device in the system broadcast message, the relay terminal may enter the RRC connected state, and the network device may directly configure a relay mode available to the network device for the relay terminal.

In some embodiments, a configuration associated with the layer 2-based network relay is different from a configuration associated with the layer 3-based network relay. The configuration includes at least one of: a resource pool configuration for data transmission, a Bandwidth Part (BWP) configuration for data transmission, a carrier configuration for data transmission, a resource pool configuration for discovery message transmission, a BWP configuration for discovery message transmission, or a carrier configuration for discovery message transmission.

In a specific implementation, the layer 2-based network relay and the layer 3-based network relay may use different resource pool configurations for data transmission. The layer 2-based network relay and the layer 3-based network relay may use different BWP configurations for data transmission. The layer 2-based network relay and the layer 3-based network relay may also use carrier configurations for data transmission.

The layer 2-based network relay and layer 3-based network relay may use different resource pool configurations for discovery message transmission. The layer 2-based network relay and the layer 3-based network relay may also use different BWP configurations for discovery message transmission. The layer 2-based network relay and the layer 3-based network relay may also use different carrier configurations for discovery message transmission.

The resource pool configuration for data transmission may be a resource pool configuration for sending data; the BWP configuration for data transmission may be a BWP configuration for sending data; the carrier configuration for data transmission may be a carrier configuration for sending data; the resource pool configuration for discovery message transmission may be a resource pool configuration for sending discovery message(s); the BWP configuration for discovery message transmission may be a BWP configuration for sending discovery message(s); and the carrier configuration for discovery message transmission may be a carrier configuration for sending discovery message(s).

In some embodiments, a radio bearer configuration associated with the layer 2-based network relay is different from a radio bearer configuration associated with the layer 3-based network relay. That is, the layer 2-based network relay and the layer 3-based network relay each supports a different wireless bearer.

In some embodiments, a destination associated with the layer 2-based network relay is different from a destination associated with the layer 3-based network relay. Specifically, a destination identifier (ID) associated with the layer 2-based network relay is different from a destination ID associated with the layer 3-based network relay. It is understood that the layer 2-based network relay and the layer 3-based network relay each may support a different destination. For example, if the destination ID carried in transmitted data or discovery information is 1, the layer 2-based network relay is supported, and if the destination ID carried in transmitted data or discovery information is 2, the layer 3-based network relay is supported.

In some embodiments, a parameter associated with the layer 2-based network relay is different from a parameter associated with the layer 3-based network relay, and the parameter includes at least one of: a Quality of Service (QoS) flow, a QoS flow identifier (QFI), or a service priority. That is to say, the layer 2-based network relay and layer 3-based network relay may support different QoS flows; the layer 2-based network relay and layer 3-based network relay may also support different QFIs; and the layer 2-based network relay and layer 3-based network relay may also support different service priorities.

In some embodiments, for the first way to the third way, if the network device indicates the relay mode supported by the network device in the first indication information carried by the system broadcast message in an explicit manner, but the network device does not carry the configuration information of the relay mode supported by the network device in the system broadcast message, then the method may further include an operation S202.

In operation S202, the relay terminal sends a first request message to the network device, where the first request message is used for requesting configuration information corresponding to the relay mode supported by the network device.

In some embodiments, if the relay terminal receives a system broadcast message associated with the relay broadcast by the network device within the coverage of the network device, the relay terminal determines the relay mode supported by the network device by parsing the system broadcast message. If the relay terminal does not obtain, through the parsing, the configuration information of the relay mode supported by the network device in the system broadcast message, then the relay terminal may enter the RRC connected state and request the configuration information of the relay mode supported by the network device from the network device through an RRC-dedicated signaling.

In some embodiments, only one relay mode is supported for both the network device and the relay terminal. In a case where the relay terminal is within the coverage of the network device, if the relay mode indicated by the first indication information is the same as the relay mode supported by the relay terminal, then the relay terminal triggers an entry of the RRC connected state; and in a case where the relay terminal is within the coverage of the network device, if the relay mode indicated by the first indication information is different from the relay mode supported by the relay terminal, then the relay terminal triggers a cell reselection until the relay terminal selects a cell supporting a relay mode same as the relay mode supported by the relay terminal or selects a cell having a relay capability same as the relay terminal.

In some embodiments, if the first indication information indicates that the network device supports both layer 2-based network relay and layer 3-based network relay, the method may further include an operation S203.

In operation S203, the relay terminal sends second indication information to the network device, where the second indication information is used for indicating the relay mode supported by the relay terminal.

In some embodiments, the relay terminal is in an RRC connected state within the coverage of the network device. After the network device receives the second indication information, the network device may send relay configuration information to the relay terminal through RRC signaling. The relay configuration information is configuration information of a relay mode supported by both the network device and the relay device.

FIG. 4 illustrates another optional processing flow of a method for determining a relay mode according to an embodiment of the present disclosure. The method may at least include an operation S301.

In operation S301, a network device sends first indication information to a relay terminal, where the first indication information is used for indicating a relay mode supported by the network device.

In some embodiments, the description for the first indication information and the description for the first indication information being used for indicating the relay mode supported by the network device are the same as the operation S201, which will not be repeated herein.

In some embodiments, if the network device indicates the relay mode supported by the network device in the first indication information carried by a system broadcast message in an explicit manner, but the network device does not carry the configuration information of the relay mode supported by the network device in the system broadcast message, the method may further include an operation S302.

In operation S302, the network device receives a first request message from the relay terminal, where the first request message is used for requesting configuration information corresponding to the relay mode supported by the network device.

In some embodiments, if the relay terminal receives a system broadcast message associated with the relay broadcast by the network device within the coverage of the network device, the relay terminal determines the relay mode supported by the network device by parsing the system broadcast message. If the relay terminal does not obtain, through the parsing, the configuration information of the relay mode supported by the network device in the system broadcast message, then the relay terminal may enter the RRC connected state and request the configuration information of the relay mode supported by the network device from the network device through an RRC-dedicated signaling.

In some embodiments, the method may further include an operation S303.

In operation S303, the network device receives second indication information from the relay terminal, where the second indication information is used for indicating a relay mode supported by the relay terminal.

In some embodiments, the relay terminal is in an RRC connected state within the coverage of the network device. After the network device receives the second indication information, the network device may send relay configuration information to the relay terminal through RRC signaling. The relay configuration information is configuration information of a relay mode supported by both the network device and the relay device.

FIG. 5 illustrates yet another optional processing flow of a method for determining a relay mode according to an embodiment of the present disclosure. The method may at least include an operation S401.

In operation S401, a first terminal device sends first information to a second terminal device, where the first information is used for determining a relay mode supported by the first terminal device.

In some embodiments, the first information may be a discovery message and the first information may also be a direct communication request message.

In some embodiments, the first terminal device is a terminal device in device-to-device (D2D) communication, and the second terminal device is a remote terminal device (or remote UE) in the D2D communication. Alternatively, the first terminal device is a remote terminal device in the D2D communication, and the second terminal device is a terminal device in the D2D communication.

In some embodiments, the relay mode may include a layer 2-based network relay and a layer 3-based network relay. The relay mode may also include a layer 1-based network relay or other relay modes.

Different ways in which the second terminal device receives the first information from the first terminal are described below.

In the fifth way, the layer 2-based network relay and the layer 3-based network relay are indicated by same information. In some embodiments, a source ID associated with the layer 2-based network relay comprised in the relay mode is different from a source ID associated with the layer 3-based network relay comprised in the relay mode.

In a specific implementation, if the first terminal device simultaneously supports the layer 2-based network relay and the layer 3-based network relay, the first terminal device sends a discovery message to the second terminal device. When the second terminal device selects the communication terminal, the second terminal device needs to make clear that a relay mode adopted by the second terminal device is the layer 2-based network relay or the layer 3-based network relay. An optional manner is that the first terminal device uses different source IDs when sending the discovery message, such as, Discovery Message { Source Layer 2 ID1 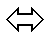 Layer 2 Relay, Source Layer 2 ID2 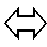 Layer 3 Relay}, and the different source IDs are associated with different relay modes. For example, the source ID1 is associated with the layer 2-based network relay, and indicates that the first terminal device supports the layer 2-based network relay; and the source ID2 is associated with the layer 3-based network relay, and indicates that the first terminal device supports the layer 3-based network relay.

In some embodiments, after the first terminal device sends the first information, the first terminal device receives second information from the second terminal device, and the second information is used for determining a relay mode supported by the second terminal device.

In a specific implementation, if the first information is a discovery message, the second information is a direct communication request message. When the second terminal device sends the direct communication request, the second terminal device may carry the destination ID corresponding to the relay mode supported by the second terminal device in the direct communication request message, and the first terminal device may determine the relay mode supported by the second terminal device according to the second information.

In the sixth way, the layer 2-based network relay and the layer 3-based network relay are indicated by the same information. In some embodiments, the first information includes a second field for indicating that the relay mode supported by the first terminal device is at least one of the layer 2-based network relay or layer 3-based network relay.

In some embodiments, the first information explicitly indicates a relay mode supported by the first terminal device. Taking the first information being a discovery message as an example, when the first terminal device sends the discovery message, a field "Discovery Message{relayTypeCapability{Layer 2, Layer 3, Both} }" can be carried in the discovery message. The "relayTypeCapability" is used for indicating that the relay mode supported by the first terminal device is the layer 2-based network relay and the layer 3-based network relay. After the second terminal device receives the first information, the second terminal device may send a direct communication request message to the first terminal device. The direct communication request message may explicitly carries the relay mode supported by the second terminal device, so that the first terminal device can determine the relay mode supported by the second terminal device by phasing the direct communication request message.

In the seventh way, the layer 2-based network relay and the layer 3-based network relay are indicated by the same information. In some embodiments, a sending resource pool configuration associated with the layer 2-based network relay comprised in the relay mode is different from a sending resource pool configuration associated with the layer 3-based network relay comprised in the relay mode.

In some embodiments, taking the first information being a discovery message as an example, the discovery messages sent by the first terminal device may be associated with different resource pool configurations for sending. For example, the field carried in the discovery message can be "Discovery Message{Resource Pool Configuration 1 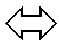 Layer 2 Relay, Resource pool configuration 2 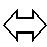 Layer 3 Relay} ", then resource pool configuration 1 is associated with the layer 2-based network relay, and resource pool configuration 2 is associated with the layer 3-based network relay. When the second terminal device receives the discovery message, the relay mode supported by the first terminal device may be determined according to the resource pool configuration. Correspondingly, the second terminal device may also carry, according to the relay mode supported by itself, a resource pool configuration corresponding to the relay mode supported by the second terminal device when sending the direct communication request message to the first terminal device, so that the first terminal device determines the relay mode supported by the second terminal device according to the resource pool configuration.

In the eighth way, the layer 2-based network relay and the layer 3-based network relay are indicated by the same information. In some embodiments, a parameter associated with the layer 2-based network relay is different from a parameter associated with the layer 3-based network relay, and the parameter includes at least one of: a QoS flow, a QFI, or a service priority.

In some embodiments, taking the first information being a discovery message as an example, the discovery message sent by the first terminal device may be associated with different parameters. For example, the field carried in the discovery message may be "Discovery Message{QoS 1/QFI1/ServicePriority 1 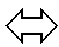 Layer 2 Relay, QoS2/QFI2/ServicePriority2 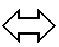 Layer 3 Relay}", where the QoS1, QFI1, and ServicePriority1 are associated with the layer 2-based network relay, and QoS2, QFI2, and ServicePriority2 are associated with the layer 3-based network relay.

In some embodiments, a correspondence between the relay mode and at least one of a QoS list, a QFI list, or a service priority list may be configured. Thus, the signaling overhead of the first information can be saved.

In the ninth way, the layer 2-based network relay and the layer 3-based network relay are indicated by different information. A sending resource pool corresponding to the layer 2-based network relay comprised in the relay mode is different from a sending resource pool corresponding to the layer 3-based network relay comprised in the relay mode, and a sending resource pool for sending the first information is used for determining the relay mode supported by the first terminal device.

In some embodiments, the network device configures sending resource pools suitable for different relay modes for the first terminal device, and the first terminal device sends discovery messages of different relay modes within the different sending resource pools. After the second terminal device receives the discovery message, the second terminal device may determine the relay mode supported by the first terminal device according to the type of the sending resource pool.

In the tenth way, the layer 2-based network relay and the layer 3-based network relay are indicated by different information. The layer 2-based network relay and the layer 3-based network relay that are comprised in the relay mode correspond to the same sending resource pool, and the first information explicitly indicates the relay mode supported by the first terminal device.

In some embodiments, for different relay modes, the network device configures a sending resource pool for the first terminal device and the first terminal device sends first information in the sending resource pool. The first information includes a third field for indicating that the first terminal device supports at least one of the layer 2-based network relay or the layer 3-based network relay. Taking the first message being a discovery message as an example, the field carried in the discovery message may be "Discover Message{Relay Type Indication}". In some embodiments, different relay modes may be associated with different parameters. For example, a parameter associated with the layer 2-based network relay is different from a parameter associated with the layer 3-based network relay, and the parameter includes at least one of: a destination ID, a source ID, a resource pool configuration, a QoS flow, a QFI, a service priority, or a sidelink radio bearer.

FIG. 6 illustrates still another optional processing flow of a method for determining a relay mode provided by an embodiment of the present disclosure. The method may at least include an operation S501.

In operation S501, a second terminal device receives first information from a first terminal device, where the first information is used for determining a relay mode supported by the first terminal device.

In some embodiments, the description for the first information and the description for the first information being used to determine the relay mode supported by the first terminal device is the same as the operation S401, which will not be repeated herein.

By adopting the method for determining a relay mode provided by the embodiments of the disclosure, in a case where a NR system simultaneously supports two or more relay modes, for example, the NR system simultaneously supports the layer 2-based network relay and the layer 3-based network relay, the network device can determine the relay mode supported by the relay terminal and the relay mode adopted for transmission, thereby accurately configuring a relay mode available to the system for the relay terminal. In a case where the relay terminal supports two or more relay modes simultaneously, the relay terminal can determine the relay mode in adopted by the relay terminal to transmit information according to the relay mode supported by the network device. In the D2D scenario, the first terminal device can explicitly indicate the relay mode supported by the first terminal device through the discovery message, and the second terminal device can also explicitly indicate the relay mode supported by the second terminal device through the direct communication request message, thereby implementing the communication between the first terminal device and the second terminal device.

In some embodiments, the first terminal device may be a relay terminal device and the second terminal device may be a terminal device in communication with the network device. The second terminal device communicates with the network device through the first terminal device. As an example, a process of the second terminal device sending the information to the network device may be that the second terminal device sends information to the first terminal device, and then the first terminal device sends the information to the network device.

In some embodiments, the second terminal device may be a relay terminal device, and the first terminal device may be a terminal device in communication with the network device. The first terminal device communicates with the network device through the second terminal device. As an example, a process of the first terminal device sending the information to the network device may be that the first terminal device sends the information to the second terminal device, and the second terminal device sends the information to the network device.

In some embodiments, the first terminal device may establish a connection with the second terminal device based on a sidelink technology. As an example, the information transmission between the first terminal device and the second terminal device is performed based on the sidelink technology.

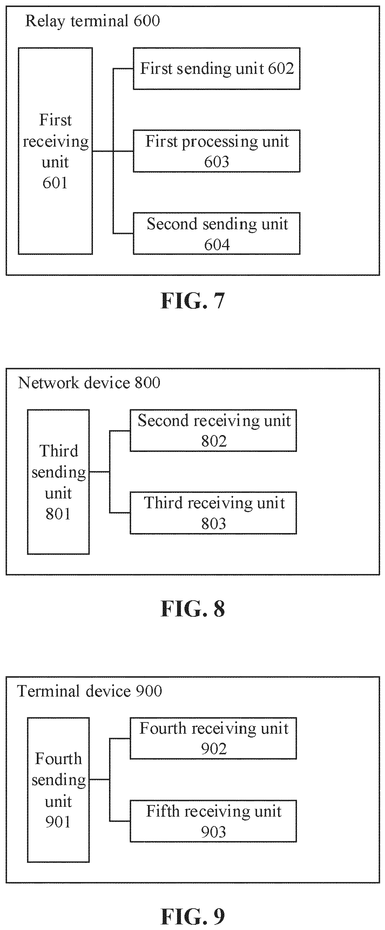

In order to implement the method for determining a relay mode provided by the embodiments of the present disclosure, embodiments of the present disclosure also provide a relay terminal. FIG. 7 illustrates an optional composition structure of a relay device 600. The relay device 600 includes a first receiving unit 601.

The first receiving unit 601 is configured to receive first indication information from a network device, where the first indication information is used for indicating a relay mode supported by the network device.

In some embodiments, the first indication information is comprised in at least one of a first system broadcast message or a second system broadcast message.

The first system broadcast message is used for indicating that the relay mode supported by the network device is a layer 2-based network relay.

The second system broadcast message is used for indicating that the relay mode supported by the network device is a layer 3-based network relay.

In some embodiments, the first indication information includes a first field for indicating that the relay mode supported by the network device is at least one of a layer 2-based network relay or a layer 3-based network relay.

In some embodiments, the first indication information is comprised in a system broadcast message associated with a relay.

In response to the system broadcast message associated with the relay including configuration information of a layer 2-based network relay, the relay mode supported by the network device is the layer 2-based network relay.

And/or, in response to the system broadcast message associated with the relay including configuration information of a layer 3-based network relay, the relay mode supported by the network device is the layer 3-based network relay.

In some embodiments, a configuration associated with the layer 2-based network relay is different from a configuration associated with the layer 3-based network relay, and the configuration includes at least one of the following:

a resource pool configuration for data transmission, a Bandwidth Part (BWP) configuration for data transmission, a carrier configuration for data transmission, a resource pool configuration for discovery message transmission, a BWP configuration for discovery message transmission, or a carrier configuration for discovery message transmission.

In some embodiments, a radio bearer configuration associated with the layer 2-based network relay is different from a radio bearer configuration associated with the layer 3-based network relay.

In some embodiments, a destination associated with the layer 2-based network relay is different from a destination associated with the layer 3-based network relay.

In some embodiments, a parameter associated with the layer 2-based network relay is different from a parameter associated with the layer 3-based network relay, and the parameter includes at least one of the following:
a QoS flow, a QFI, or a service priority.

In some embodiments, the relay terminal 600 further includes a first sending unit 602.

The first sending unit 602 is configured to send a first request message to the network device, where the first request message is used for requesting configuration information corresponding to the relay mode supported by the network device.

In some embodiments, the relay terminal 600 further includes a first processing unit 603.

The first processing unit 603 is configured to trigger, in response to the relay mode indicated by the first indication information being the same as a relay mode supported by the relay terminal, entry of a radio resource control connected state in a case where the relay terminal is within a network coverage of the network device.

The first processing unit 603 is configured to trigger, in response to the relay mode indicated by the first indication information being different from the relay mode supported by the relay terminal, a cell reselection in a case where the relay terminal is within the network coverage of the network device.

In some embodiments, the relay terminal 600 further includes a second sending unit 604.

The second sending unit 604 is configured to send second indication information to the network device, where the second indication information is used to indicate a relay mode supported by the relay terminal.

In some embodiments, the first receiving unit 601 is further configured to receive relay configuration information from the network device, where the relay configuration information is configuration information of a relay mode supported by both the network device and the relay terminal.

In order to implement the method for determining the relay mode provided by the embodiments of the present disclosure, embodiments of the present disclosure also provide a network terminal. FIG. 8 illustrates an optional composition structure of a network device 800. The network device 800 includes a third sending unit 801.

The third sending unit 801 is configured to send first indication information to a relay terminal, where the first indication information is used for indicating a relay mode supported by the network device.

In some embodiments, the first indication information is comprised in at least one of a first system broadcast message or a second system broadcast message.

The first system broadcast message is used for indicating that the relay mode supported by the network device is a layer 2-based network relay.

The second system broadcast message is used for indicating that the relay mode supported by the network device is a layer 3-based network relay.

In some embodiments, the first indication information includes a first field for indicating that the relay mode supported by the network device is at least one of a layer 2-based network relay or a layer 3-based network relay.

In some embodiments, the first indication information is comprised in a system broadcast message associated with a relay.

In response to the system broadcast message associated with the relay including configuration information of a layer 2-based network relay, the relay mode supported by the network device is the layer 2-based network relay.

And/or, in response to the system broadcast message associated with the relay including configuration information of a layer 3-based network relay, the relay mode supported by the network device is the layer 3-based network relay.

In some embodiments, a configuration associated with the layer 2-based network relay is different from a configuration associated with the layer 3-based network relay, and the configuration includes at least one of the following:
a resource pool configuration for data transmission, a Bandwidth Part (BWP) configuration for data transmission, a carrier configuration for data transmission, a resource pool configuration for discovery message transmission, a BWP configuration for discovery message transmission, or a carrier configuration for discovery message transmission.

In some embodiments, a radio bearer configuration associated with the layer 2-based network relay is different from a radio bearer configuration associated with the layer 3-based network relay.

In some embodiments, a destination associated with the layer 2-based network relay is different from a destination associated with the layer 3-based network relay.

In some embodiments, a parameter associated with the layer 2-based network relay is different from a parameter associated with the layer 3-based network relay, and the parameter includes at least one of the following:
a QoS flow, a QFI, or a service priority.

In some embodiments, the network device 800 further includes a second receiving unit 802 configured to receive a first request message from the relay terminal, where the first request message is used for requesting configuration information corresponding to the relay mode supported by the network device.

In some embodiments, the network device 800 further includes a third receiving unit 803.

The third receiving unit 803 is configured to receive second indication information from the relay terminal, where the second indication information is used for indicating a relay mode supported by the relay terminal.

In some embodiments, the third sending unit 801 is further configured to send relay configuration information to the relay terminal, where the relay configuration information is configuration information of a relay mode supported by both the network device and the relay terminal.

In order to implement the method for determining the relay mode provided by the embodiments of the present disclosure, embodiments of the present disclosure also provide a first terminal device. FIG. 9 illustrates an optional composition structure of a first terminal device 900. The first terminal device 900 includes a fourth sending unit 901.

The fourth sending unit 901 is configured to send first information to a second terminal device, where the first information is used for determining a relay mode supported by the first terminal device.

In some embodiments, a source ID associated with a layer 2-based network relay comprised in the relay mode is different from a source ID associated with a layer 3-based network relay comprised in the relay mode.

In some embodiments, the first terminal device 900 further includes a fourth receiving unit 902.

The fourth receiving unit 902 is configured to receive second information from the second terminal device, where the second information is used for determining a relay mode supported by the second terminal device.

In some embodiments, a destination ID associated with the layer 2-based network relay comprised in the relay mode supported by the second terminal device is different from a destination ID associated with the layer 3-based network relay comprised in the relay mode supported by the second terminal device.

In some embodiments, the first information includes a second field for indicating that the relay mode supported by the first terminal device is at least one of a layer 2-based network relay or a layer 3-based network relay.

In some embodiments, a sending resource pool configuration associated with the layer 2-based network relay comprised in the relay mode is different from a sending resource pool configuration associated with the layer 3-based network relay comprised in the relay mode.

In some embodiments, a parameter associated with the layer 2-based network relay is different from a parameter associated with the layer 3-based network relay, and the parameter includes at least one of the following:
a QoS flow, a QFI, or a service priority.

In some embodiments, the layer 2-based network relay and the layer 3-based network relay are indicated by same information.

In some embodiments, a sending resource pool corresponding to the layer 2-based network relay comprised in the relay mode is different from a sending resource pool corresponding to the layer 3-based network relay comprised in the relay mode, and a sending resource pool for sending the first information is used for determining the relay mode supported by the first terminal device.

In some embodiments, the first terminal device 900 further includes a fifth receiving unit 903.

The fifth receiving unit 903 is configured to receive third information from the second terminal device, where the third information is sent in a resource pool corresponding to a relay mode supported by the second terminal device.

In some embodiments, the first information includes a third field for indicating that the first terminal device supports at least one of a layer 2-based network relay or a layer 3-based network relay.

In some embodiments, a parameter associated with the layer 2-based network relay is different from a parameter associated with the layer 3-based network relay, and the parameter includes at least one of the following:
a destination ID, a source ID, a resource pool configuration, a QoS flow, a QFI, a service priority, or a sidelink radio bearer.

In some embodiments, the layer 2-based network relay and the layer 3-based network relay are indicated by different information.

In some embodiments, the first information includes a discovery message or a direct communication request message.

In some embodiments, the first terminal device is a terminal device in device-to-device (D2D) communication, and the second terminal device is a remote terminal device in the D2D communication.

Optionally, the first terminal device is a remote terminal device in the D2D communication, and the second terminal device is a terminal device in the D2D communication.

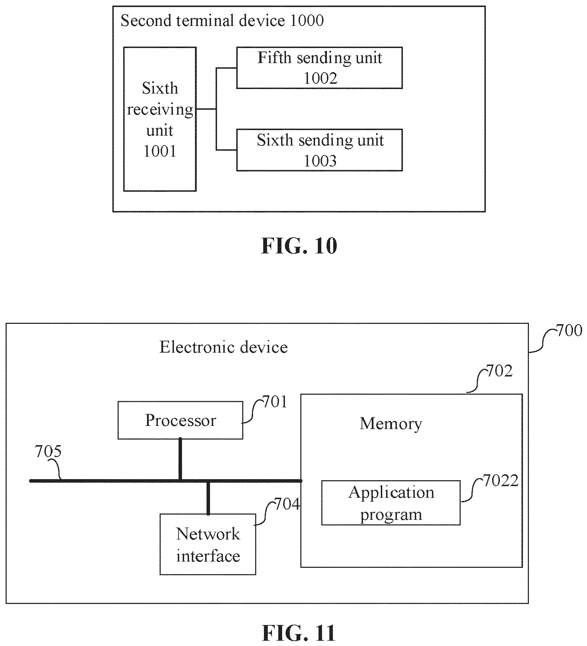

In order to implement the method for determining the relay mode provided by the embodiments of the present disclosure, embodiments of the present disclosure also provide a second terminal device. FIG. 10 illustrates an optional composition structure of a second terminal device 1000. The second terminal device 1000 includes a sixth receiving unit 1001.

The sixth receiving unit 1001 is configured to receive first information from a first terminal device, where the first information is used for determining a relay mode supported by the first terminal device.

In some embodiments, a source ID associated with a layer 2-based network relay comprised in the relay mode is different from a source ID associated with a layer 3-based network relay comprised in the relay mode.

In some embodiments, the second terminal device 1000 further includes a fifth sending unit 1002.

The fifth sending unit 1002 is configured to send second information to the first terminal device, where the second information is used for determining a relay mode supported by the second terminal device.

In some embodiments, a destination ID associated with the layer 2-based network relay comprised in the relay mode is different from a destination ID associated with the layer 3-based network relay comprised in the relay mode.

In some embodiments, the first information includes a second field for indicating that the relay mode supported by the first terminal device is at least one of a layer 2-based network relay or a layer 3-based network relay.

In some embodiments, a sending resource pool configuration associated with the layer 2-based network relay comprised in the relay mode is different from a sending resource pool configuration associated with the layer 3-based network relay comprised in the relay mod.

In some embodiments, a parameter associated with the layer 2-based network relay is different from a parameter associated with the layer 3-based network relay, and the parameter includes at least one of the following:
a QoS flow, a QFI, or a service priority.

In some embodiments, the layer 2-based network relay and the layer 3-based network relay are indicated by same information.

In some embodiments, a sending resource pool corresponding to the layer 2-based network relay comprised in the relay mode is different from a sending resource pool corresponding to the layer 3-based network relay comprised in the relay mode, and a sending resource pool for sending the first information is used for determining the relay mode supported by the first terminal device.

In some embodiments, the second terminal device 1000 further includes a sixth sending unit 1003.

The sixth sending unit 1003 is configured to send third information to the first terminal device, where the third information is sent in a resource pool corresponding to a relay mode supported by the second terminal device.

In some embodiments, the first information includes a third field for indicating that the first terminal device supports at least one of a layer 2-based network relay or a layer 3-based network relay.

In some embodiments, a parameter associated with the layer 2-based network relay is different from a parameter associated with the layer 3-based network relay, and the parameter includes at least one of the following:
a destination ID, a source ID, a resource pool configuration, a QoS flow, a QFI, a service priority, or a sidelink radio bearer.

In some embodiments, the layer 2-based network relay and the layer 3-based network relay are indicated by different information.

In some embodiments, the first information includes a discovery message or a direct communication request message.

In some embodiments, the first terminal device is a terminal device in D2D communication, and the second terminal device is a remote terminal device in the D2D communication.

Optionally, the first terminal device is a remote terminal device in the D2D communication, and the second terminal device is a terminal device in the D2D communication.

Embodiments of the disclosure also provide a relay terminal including a processor and a memory for storing computer programs executable on the processor, the processor is configured to perform, when executing the computer programs, the operations of the method for determining the relay mode performed by the relay terminal .

Embodiments of the disclosure also provide a network device including a processor and a memory for storing computer programs executable on the processor, the processor is configured to perform, when executing the computer programs, the operations of the method for determining the relay mode performed by the network device.

Embodiments of the disclosure also provide a first terminal device including a processor and a memory for storing computer programs executable on the processor, and the processor is configured to perform, when executing the computer programs, the operations of the method for determining the relay mode performed by the first terminal device.

Embodiments of the disclosure also provide a second terminal device including a processor and a memory for storing computer programs executable on the processor, the processor is configured to perform, when executing the computer programs, the operations of the method for determining the relay mode performed by the second terminal device.

Embodiments of the disclosure also provide a chip including a processor configured to invoke and execute computer programs from a memory, to cause a device installed with the chip to implement the method for determining the relay mode performed by the network device.

Embodiments of the disclosure also provide a chip including a processor configured to invoke and execute computer programs from a memory, to cause a device installed with the chip to implement the method for determining the relay mode performed by the relay terminal.

Embodiments of the disclosure also provide a chip including a processor configured to invoke and execute computer programs from a memory, to cause a device installed with the chip to implement the method for determining the relay mode performed by the first terminal device.

Embodiments of the disclosure also provide a chip including a processor configured to invoke and execute computer programs from a memory, to cause a device installed with the chip to implement the method for determining the relay mode performed by the second terminal device.

Embodiments of the disclosure also provide a storage medium having stored thereon executable programs that, when executed by a processor, cause the processor to implement the method for determining the relay mode performed by the relay terminal.

Embodiments of the disclosure also provide a storage medium having stored thereon executable programs that, when executed by a processor, cause the processor to implement method for determining the relay mode performed by the network device.

Embodiments of the disclosure also provide a storage medium having stored thereon executable programs that, when executed by a processor, cause the processor to implement method for determining the relay mode performed by the first terminal device.

Embodiments of the disclosure also provide a storage medium having stored thereon executable programs that, when executed by a processor, cause the processor to implement method for determining the relay mode performed by the second terminal device.

Embodiments of the present disclosure also provide a computer program product, including computer program instructions that cause a computer to implement the method for determining the relay mode performed by the relay terminal.

Embodiments of the present disclosure also provide a computer program product including computer program instructions that cause a computer to implement the method for determining the relay mode performed by the network device.

Embodiments of the present disclosure also provide a computer program product including computer program instructions that cause a computer to implement the method for determining the relay mode performed by the first terminal device.

Embodiments of the present disclosure also provide a computer program product including computer program instructions that cause a computer to implement the method for determining the relay mode by the second terminal device.

Embodiments of the disclosure also provide a computer program causing a computer to implement the method for determining the relay mode performed by the relay terminal.

Embodiments of the disclosure also provide a computer program causing a computer to implement the method for determining the relay mode performed by the network device.

Embodiments of the disclosure also provide a computer program causing a computer to implement the method for determining the relay mode performed by the first terminal device.

Embodiments of the disclosure also provide a computer program causing a computer to implement the method for determining the relay mode performed by the second terminal.

FIG. 11 is a schematic diagram of a hardware composition structure of an electronic device (a relay terminal, a first terminal device, a second terminal device or a network device) according to an embodiment of the present disclosure. The electronic device 700 includes at least one processor 701, a memory 702 and at least one network interface 704. The various components in the electronic device 700 are coupled together by a bus system 705. It can be understood that the bus system 705 is configured to implement connection and communication between these components. The bus system 705 includes a power bus, a control bus and a status signal bus in addition to a data bus. However, for clarity, the various buses are designated as the bus system 705 in FIG. 11.

It can be appreciated that the memory 702 may be a volatile memory or non-volatile memory, or may include both volatile and non-volatile memories. The non-volatile memory can be a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a magnetic disk memory or a magnetic tape memory. The volatile memory may be a random-access memory (RAM), which acts as an external cache. By way of illustration but not limitation, many forms of RAMs are available, such as a static random-access memory (SRAM), a synchronous static random-access memory (SSRAM), a dynamic random-access memory (DRAM), a synchronous dynamic random-access memory (SDRAM), a double data rate synchronous dynamic random-access memory (DDRSDRAM), an enhanced synchronous dynamic random-access memory (ESDRAM), a SyncLink dynamic random-access memory (SLDRAM), and a direct Rambus random-access memory (DRRAM).The memory 702 described in the embodiments of the present disclosure is intended to include, but is not limited to, these and any other suitable types of memories.

The memory 702 in the embodiments of the present disclosure is configured to store various types of data to support the operations of the electronic device 700. Examples of such data include any computer program for operating on the electronic device 700, such as an application program 7022. The programs for implementing the method in the embodiments of the present disclosure may be included in the application program 7022.

The methods disclosed in the above embodiments of the present disclosure may be applied to or implemented by the processor 701. The processor 701 may be an integrated circuit chip with signal processing capabilities. During implementation, each step of the above method embodiments can be completed by an integrated logic circuit of hardware or instructions in the form of software in the processor 701. The above processor 701 may be a general-purpose processor, a digital signal processor (DSPS), or other programmable logic devices, discrete gate or transistor logic devices, discrete hardware components, and the like. The disclosed methods, operations and logic block diagrams in the embodiments of the present disclosure may be implemented or executed by the processor 701. The general-purpose processor may be a microprocessor or the processor may be any conventional processor or the like. The operations of the method disclosed in connection with the embodiment of the present disclosure may be directly executed and completed by a hardware decoding processor, or by the combination of hardware and software modules in the decoding processor. The software modules may be located in a storage medium, and the storage medium is located in the memory 702. The processor 701 reads the information in the memory 702 and completes the operations of the above method in combination with hardware thereof.

In an exemplary embodiment, the electronic device 700 may be implemented by one or more application specific integrated circuits (ASICs), DSPs, programmable logic devices (PLDs), complex PLDs (CPLDs), FPGA, general-purpose processors, controllers, MCUs, MPUs, or other electronic components, to implement the foregoing methods.

The present disclosure is described with reference to flowcharts and/or block diagrams of the methods, devices (systems) and computer program products according to the embodiments of the disclosure. It is to be understood that each flow and/or block in the flowcharts and/or the block diagrams and a combination of flows and/or blocks in the flowcharts and/or the block diagrams may be implemented by computer program instructions. These computer program instructions may be provided for a processor of a universal computer, a dedicated computer, an embedded processor, or another programmable data processing device to produce a machine, such that instructions executed by the processor of the computer or other programmable data processing devices produce an apparatus for implementing functions specified in one or more flows in the flowcharts and/or one or more blocks in the block diagrams.

These computer-readable program instructions may also be stored in a computer-readable storage medium capable of directing a computer or other programmable data processing devices to operate in a specific manner, such that the instructions stored in the computer-readable memory produce an article of manufacture including an instruction means for implementing the functions specified in one or more flows in the flowcharts and/or one or more blocks in the block diagrams.

These computer-readable program instructions may further be loaded to a computer or other programmable data processing devices, so that a series of operating steps are executed in the computer or the other programmable data processing devices to generate a computer-implemented process , such that operations for implementing the functions specified in one or more flows in the flowcharts and/or one or more blocks in the block diagrams is provided by the instructions executed in the computer or the other programmable data processing devices.

It should be understood that the terms "system" and "network" herein are often used interchangeably herein. In this disclosure, the term "and/or" is only to describe an association relationship between associated objects and represents that three kinds of relationships may exist. For example, A and/or B may represent three conditions: i.e., independent existence of A, existence of both A and B and independent existence of B. In addition, the character "/" in the disclosure generally indicates that the associated objects before and after this character is in an "or" relationship.

## Claims

1. A method for determining a relay mode, comprising
receiving (S201), by a relay terminal, first indication information from a network device, wherein the first indication information is used for indicating a relay mode supported by the network device and is explicitly carried in a system broadcast message, and the first indication information comprises a first field for indicating that the relay mode supported by the network device is at least one of a layer 2-based network relay or a layer 3-based network relay.

2. The method of claim 1, further comprising:
sending, by the relay terminal, a first request message to the network device, wherein the first request message is used for requesting configuration information corresponding to the relay mode supported by the network device.

3. The method of claim 1 or 2, wherein
in a case where the relay terminal is within a network coverage of the network device, in response to the relay mode indicated by the first indication information being the same as a relay mode supported by the relay terminal, triggering, by the relay terminal, entry of a radio resource control connected state; and
in a case where the relay terminal is within the network coverage of the network device, in response to the relay mode indicated by the first indication information being different from the relay mode supported by the relay terminal, triggering, by the relay terminal, a cell reselection.

4. The method of claim 1 or 2, further comprising:
sending, by the relay terminal, second indication information to the network device, wherein the second indication information is used for indicating a relay mode supported by the relay terminal.

5. The method of claim 4, further comprising:
receiving, by the relay terminal, relay configuration information from the network device, wherein the relay configuration information is configuration information of a relay mode supported by both the network device and the relay terminal.

6. A method for determining a relay mode, comprising
sending (S301), by a network device, first indication information to a relay terminal, wherein the first indication information is used for indicating a relay mode supported by the network device and is explicitly carried in a system broadcast message, and the first indication information comprises a first field for indicating that the relay mode supported by the network device is at least one of a layer 2-based network relay or a layer 3-based network relay.

7. The method of claim 6, further comprising:
receiving, by the network device, a first request message from the relay terminal, wherein the first request message is used for requesting configuration information corresponding to the relay mode supported by the network device.

8. The method of claim 6 or 7, further comprising:
receiving, by the network device, second indication information from the relay terminal, wherein the second indication information is used for indicating a relay mode supported by the relay terminal.

9. The method of claim 8, further comprising:
sending, by the network device, relay configuration information to the relay terminal, wherein the relay configuration information is configuration information of a relay mode supported by both the network device and the relay terminal.

10. A relay terminal, comprising:
a first receiving unit (601), configured to receive first indication information from a network device, wherein the first indication information is used for indicating a relay mode supported by the network device and is explicitly carried in a system broadcast message, and the first indication information comprises a first field for indicating that the relay mode supported by the network device is at least one of a layer 2-based network relay or a layer 3-based network relay.

11. A network device, comprising
a third sending unit (801), configured to send first indication information to a relay terminal, wherein the first indication information is used for indicating a relay mode supported by the network device and is explicitly carried in a system broadcast message, and the first indication information comprises a first field for indicating that the relay mode supported by the network device is at least one of a layer 2-based network relay or a layer 3-based network relay.

## Patentansprüche

1. Verfahren zum Bestimmen eines Relaismodus, umfassend:
Empfangen (S201) erster Anzeigeinformationen aus einer Netzwerkvorrichtung durch ein Relaisendgerät, wobei die ersten Anzeigeinformationen zum Anzeigen eines durch die Netzwerkvorrichtung unterstützten Relaismodus verwendet und explizit in einer Systemrundsendungsnachricht transportiert werden und die ersten Anzeigeinformationen ein erstes Feld umfassen, das anzeigt, dass der durch die Netzwerkvorrichtung unterstützte Relaismodus mindestens eines von einem netzwerkbasierten Relais der Schicht 2 oder einem netzwerkbasierten Relais der Schicht 3 ist.

2. Verfahren nach Anspruch 1, ferner umfassend:
Senden einer ersten Anforderungsnachricht an die Netzwerkvorrichtung durch das Relaisendgerät, wobei die erste Anforderungsnachricht zum Anfordern von Konfigurationsinformationen entsprechend dem durch die Netzwerkvorrichtung unterstützten Relaismodus verwendet wird.

3. Verfahren nach Anspruch 1 oder 2, wobei
in einem Fall, in dem sich das Relaisendgerät innerhalb einer Netzwerkabdeckung der Netzwerkvorrichtung befindet, als Reaktion darauf, dass der durch die ersten Anzeigeinformationen angezeigte Relaismodus gleich wie ein durch das Relaisendgerät unterstützter Relaismodus ist, Auslösen des Eintritts in einen verbundenen Funkressourcensteuerungszustand durch das Relaisendgerät; und
in einem Fall, in dem sich das Relaisendgerät innerhalb der Netzwerkabdeckung der Netzwerkvorrichtung befindet, als Reaktion darauf, dass der durch die ersten Anzeigeinformationen angezeigte Relaismodus sich von dem durch das Relaisendgerät unterstützten Relaismodus unterscheidet, Auslösen einer Zellenneuauswahl durch das Relaisendgerät.

4. Verfahren nach Anspruch 1 oder 2, ferner umfassend: Senden zweiter Anzeigeinformationen an die Netzwerkvorrichtung durch das Relaisendgerät, wobei die zweiten Anzeigeinformationen zum Anzeigen eines durch das Relaisendgerät unterstützten Relaismodus verwendet werden.

5. Verfahren nach Anspruch 4, ferner umfassend:
Empfangen von Relaiskonfigurationsinformationen aus der Netzwerkvorrichtung durch das Relaisendgerät, wobei die Relaiskonfigurationsinformationen
Konfigurationsinformationen eines Relaismodus sind, der sowohl durch die Netzwerkvorrichtung als auch durch das Relaisendgerät unterstützt wird.

6. Verfahren zum Bestimmen eines Relaismodus, umfassend:
Senden (S301) erster Anzeigeinformationen an ein Relaisendgerät durch eine Netzwerkvorrichtung, wobei die ersten Anzeigeinformationen zum Anzeigen eines durch die Netzwerkvorrichtung unterstützten Relaismodus verwendet werden und explizit in einer Systemrundsendungsnachricht übertragen werden und die ersten Anzeigeinformationen ein erstes Feld umfassen, das anzeigt, dass der durch die Netzwerkvorrichtung unterstützte Relaismodus mindestens eines von einem netzwerkbasierten Relais der Schicht 2 oder einem netzwerkbasierten Relais der Schicht 3 ist.

7. Verfahren nach Anspruch 6, ferner umfassend:
Empfangen einer ersten Anforderungsnachricht aus dem Relaisendgerät durch die Netzwerkvorrichtung, wobei die erste Anforderungsnachricht zum Anfordern von Konfigurationsinformationen entsprechend dem durch die Netzwerkvorrichtung unterstützten Relaismodus verwendet wird.

8. Verfahren nach Anspruch 6 oder 7, ferner umfassend: Empfangen zweiter Anzeigeinformationen aus dem Relaisendgerät durch die Netzwerkvorrichtung, wobei die zweiten Anzeigeinformationen zum Anzeigen eines durch das Relaisendgerät unterstützten Relaismodus verwendet werden.

9. Verfahren nach Anspruch 8, ferner umfassend:
Senden von Relaiskonfigurationsinformationen an das Relaisendgerät durch die Netzwerkvorrichtung, wobei die Relaiskonfigurationsinformationen
Konfigurationsinformationen eines Relaismodus sind, der sowohl durch die Netzwerkvorrichtung als auch durch das Relaisendgerät unterstützt wird.

10. Relaisendgerät, umfassend:
eine erste Empfangseinheit (601), die dazu ausgelegt ist, erste Anzeigeinformationen aus einer Netzwerkvorrichtung zu empfangen, wobei die ersten Anzeigeinformationen zum Anzeigen eines durch die Netzwerkvorrichtung unterstützten Relaismodus und explizit in einer Systemrundsendungsnachricht übertragen werden, und die ersten Anzeigeinformationen ein erstes Feld umfassen, das anzeigt, dass der durch die Netzwerkvorrichtung unterstützte Relaismodus mindestens eines von einem netzwerkbasierten Relais der Schicht 2 oder einem netzwerkbasierten Relais der Schicht 3 ist.

11. Netzwerkvorrichtung, umfassend:
eine dritte Sendeeinheit (801), die dazu ausgelegt ist, erste Anzeigeinformationen an ein Relaisendgerät zu senden, wobei die ersten Anzeigeinformationen zum Anzeigen eines durch die Netzwerkvorrichtung unterstützten Relaismodus verwendet und explizit in einer Systemrundsendungsnachricht übertragen werden und die ersten Anzeigeinformationen ein erstes Feld umfassen, das anzeigt, dass der durch die Netzwerkvorrichtung unterstützte Relaismodus mindestens eines von einem netzwerkbasierten Relais der Schicht 2 oder einem netzwerkbasierten Relais der Schicht 3 ist.

## Revendications

1. Procédé de détermination de mode de relais, comprenant :
la réception (S201), par un terminal de relais, de premières informations d'indication depuis un dispositif de réseau, dans lequel les premières informations d'indication sont utilisées pour indiquer un mode de relais pris en charge par le dispositif de réseau et sont explicitement transportées dans un message de diffusion système, et les premières informations d'indication comprennent un premier champ pour indiquer que le mode de relais pris en charge par le dispositif de réseau est au moins l'un d'un relais de réseau de couche 2 et d'un relais de réseau de couche 3.

2. Procédé selon la revendication 1, comprenant en outre :
l'envoi, par le terminal de relais, d'un premier message de demande au dispositif de réseau, dans lequel le premier message de demande est utilisé pour demander des informations de configuration correspondant au mode de relais pris en charge par le dispositif de réseau.

3. Procédé selon la revendication 1 ou 2, comprenant :
dans le cas où le terminal de relais se trouve dans une couverture de réseau du dispositif de réseau, en réponse au fait que le mode de relais indiqué par les premières informations d'indication est le même qu'un mode de relais pris en charge par le terminal de relais, le déclenchement, par le terminal de relais, d'un état connecté d'une entrée d'une commande de ressource radio ; et
dans le cas où le terminal de relais se trouve dans la couverture de réseau du dispositif de réseau, en réponse au fait que le mode de relais indiqué par les premières informations d'indication est différent du mode de relais pris en charge par le terminal de relais, le déclenchement, par le terminal de relais, d'une resélection de cellule.

4. Procédé selon la revendication 1 ou 2, comprenant en outre :
l'envoi, par le terminal de relais, de secondes informations d'indication au dispositif de réseau, dans lequel les secondes informations d'indication sont utilisées pour indiquer un mode de relais pris en charge par le terminal de relais.

5. Procédé selon la revendication 4, comprenant en outre :
la réception, par le terminal de relais, d'informations de configuration de relais depuis le dispositif de réseau, dans lequel les informations de configuration de relais sont des informations de configuration d'un mode de relais pris en charge à la fois par le dispositif de réseau et le terminal de relais.

6. Procédé de détermination d'un mode de relais, comprenant
l'envoi (S301), par un dispositif de réseau, de premières informations d'indication à un terminal de relais, dans lequel les premières informations d'indication sont utilisées pour indiquer un mode de relais pris en charge par le dispositif de réseau et sont explicitement transportées dans un message de diffusion système, et les premières informations d'indication comprennent un premier champ pour indiquer que le mode de relais pris en charge par le dispositif de réseau est au moins l'un d'un relais de réseau de couche 2 et d'un relais de réseau de couche 3.

7. Procédé selon la revendication 6, comprenant en outre :
la réception, par le dispositif de réseau d'un premier message de demande depuis le terminal de relais, dans lequel le premier message de demande est utilisé pour demander des informations de configuration correspondant au mode de relais pris en charge par le dispositif de réseau.

8. Procédé selon la revendication 6 ou 7, comprenant en outre :
la réception, par le dispositif de réseau, de secondes informations d'indication depuis le terminal de relais, dans lequel les secondes informations d'indication sont utilisées pour indiquer un mode de relais pris en charge par le terminal de relais.

9. Procédé selon la revendication 8, comprenant en outre :
l'envoi, par le dispositif de réseau, d'informations de configuration de relais au terminal de relais, dans lequel les informations de configuration de relais sont des informations de configuration d'un mode de relais pris en charge à la fois par le dispositif de réseau et le terminal de relais.

10. Terminal de relais, comprenant :
une première unité de réception (601), configurée pour recevoir des premières informations d'indication depuis un dispositif de réseau, dans lequel les premières informations d'indication sont utilisées pour indiquer un mode de relais pris en charge par le dispositif de réseau et sont explicitement transportées dans un message de diffusion système, et les premières informations d'indication comprennent un premier champ pour indiquer que le mode de relais pris en charge par le dispositif de réseau est au moins l'un d'un relais de réseau de couche 2 et d'un relais de réseau de couche 3.

11. Dispositif de réseau, comprenant :
une troisième unité d'envoi (801), configurée pour envoyer des premières informations d'indication à un terminal de relais, dans lequel les premières informations d'indication sont utilisées pour indiquer un mode de relais pris en charge par le dispositif de réseau et sont explicitement transportées dans un message de diffusion système, et les premières informations d'indication comprennent un premier champ pour indiquer que le mode de relais pris en charge par le dispositif de réseau est au moins l'un d'un relais de réseau de couche 2 et d'un relais de réseau de couche 3.
